# EUROPÄISCHE PATENTSCHRIFT

(11) **EP 3 843 954 B1**
(45) Veröffentlichungstag und Bekanntmachung des Hinweises auf die Patenterteilung: **10.08.2022**
(21) Anmeldenummer: 19778883.9
(22) Anmeldetag: 18.09.2019
(51) Int. Cl.: B25J 9/16, G05B 19/418

(54) **VOLLAUTOMATISIERTE MONTAGE UND KONTAKTIERUNG ELEKTRISCHER BAUTEILE**
FULLY AUTOMATED MOUNTING AND CONTACTING OF ELECTRICAL COMPONENTS
MONTAGE ENTIÈREMENT AUTOMATISÉ ET MISE EN CONTACT DES COMPOSANTS ÉLECTRIQUES

(30) Priorität: 29.10.2018 EP 18203115
(43) Veröffentlichungstag der Anmeldung: 07.07.2021
(73) Patentinhaber: Siemens Aktiengesellschaft, 80333 München (DE)
(72) Erfinder: GEORGI, Richard, 09120 Chemnitz (DE); THIELE, Martin, 09247 Chemnitz (DE); KASPARICK, Hans-Peter, 09130 Chemnitz (DE); KROEMER, Nils, 09337 Hohenstein-Ernstthal (DE); LÖFFLER, Mirko, 09125 Chemnitz (DE)
(86) Internationale Anmeldenummer: PCT/EP2019/075029
(87) Internationale Veröffentlichungsnummer: WO 2020/088834

(56) Entgegenhaltungen:
- EP-A1- 3 260 244
- EP-A1- 3 385 038
- EP-B1- 0 823 079
- JP-A- H03 217 091
- US-A- 4 810 154
- US-A1- 2017 129 101

## Beschreibung

Die vorliegende Erfindung betrifft ein Verfahren zum Montieren und Kontaktieren elektrischer Bauteile, die elektrische Anschlüsse und Handhabungsorte aufweisen.

Die vorliegende Erfindung betrifft weiterhin ein Steuerprogramm für eine Steuereinrichtung zum Steuern einer Montageeinrichtung, wobei das Steuerprogramm Maschinencode umfasst, der von der Steuereinrichtung unmittelbar abarbeitbar ist, wobei das Abarbeiten des Maschinencodes durch die Steuereinrichtung bewirkt, dass die Steuereinrichtung die Montageeinrichtung betreibt.

Die vorliegende Erfindung betrifft weiterhin eine Steuereinrichtung zum Steuern einer Montageeinrichtung, wobei die Steuereinrichtung mit einem derartigen Steuerprogramm programmiert ist, so dass das Abarbeiten des Maschinencodes durch die Steuereinrichtung bewirkt, dass die Steuereinrichtung die Montageeinrichtung betreibt.

Die vorliegende Erfindung betrifft weiterhin eine Montageeinrichtung zum Greifen, Montieren und Kontaktieren elektrischer Bauteile, die elektrische Anschlüsse und Handhabungsorte aufweisen, wobei die Montageeinrichtung eine derartige Steuereinrichtung umfasst.

Für die automatisierte Montage von elektrischen Bauteilen wird eine Vielzahl von Daten benötigt. Diese Daten sind im Stand der Technik in der Regel nicht oder nur teilweise vorhanden. Spezifische technische Sachmerkmale, welche als Basis für eine automatisierte Montage dienen könnten, sind nicht vorhanden. Die wenigen vorhandenen Informationen sind oftmals unstrukturiert und müssen manuell in Datenbanken eingetragen werden.

Aus der EP 3 260 244 A1 ist ein Verfahren zum Montieren und Kontaktieren elektrischer Bauteile bekannt, wobei die Bauteile elektrische Anschlüsse und Handhabungsorte aufweisen. Einer Steuereinrichtung der Montageeinrichtung werden, bezogen auf ein Maschinenkoordinatensystem der Montageeinrichtung, eine Lage und eine Orientierung des jeweiligen Bauteils bekannt. Die Steuereinrichtung steuert sodann die Montageeinrichtung an, so dass das Bauteil ordnungsgemäß montiert und ordnungsgemäß elektrisch angeschlossen wird.

Die Aufgabe der vorliegenden Erfindung besteht darin, Möglichkeiten zu schaffen, mittels derer auf einfache Weise eine automatisierte Montage und Kontaktierung elektrischer Bauteile ermöglicht wird.

Die Aufgabe wird durch ein Verfahren zum Montieren und Kontaktieren elektrischer Bauteile mit den Merkmalen des Anspruchs 1 gelöst. Vorteilhafte Ausgestaltungen des erfindungsgemäßen Verfahrens sind Gegenstand der abhängigen Ansprüche 2 bis 8.

Erfindungsgemäß wird ein Verfahren zum Montieren und Kontaktieren elektrischer Bauteile, die elektrische Anschlüsse und Handhabungsorte aufweisen, mittels einer Montageeinrichtung geschaffen, bei dem
- einer Steuereinrichtung der Montageeinrichtung vor dem Greifen eines der Montageeinrichtung jeweils zugeführten Bauteils dem jeweiligen Bauteil zugeordnete Informationen zur Verfügung gestellt werden,
- die dem jeweiligen Bauteil zugeordneten Informationen, bezogen auf ein Bauteil-Koordinatensystem des jeweiligen Bauteils, für die elektrischen Anschlüsse des jeweiligen Bauteils jeweils deren Lage, deren Orientierung und eine relevante Länge und für die Handhabungsorte zumindest deren jeweilige Lage und die Art der Handhabung und vorzugsweise auch deren jeweilige Orientierung umfassen,
- der Steuereinrichtung, bezogen auf ein Maschinenkoordinatensystem der Montageeinrichtung, eine Lage und eine Orientierung des jeweiligen Bauteils bekannt werden,
- die Steuereinrichtung anhand der Lage und der Orientierung des jeweiligen Bauteils im Maschinenkoordinatensystem die durch die dem jeweiligen Bauteil zugeordneten Informationen definierten Lagen und Orientierungen in das Maschinenkoordinatensystem umrechnet,
- die Steuereinrichtung bei der Ansteuerung der Montageeinrichtung im Rahmen des Greifens und der Montage des jeweiligen Bauteils die Art und die in das Maschinenkoordinatensystem umgerechneten Lagen und, falls vorhanden, auch die in das Maschinenkoordinatensystem umgerechneten Orientierungen der Handhabungsorte des jeweiligen Bauteils berücksichtigt und
- die Steuereinrichtung bei der Ansteuerung der Montageeinrichtung im Rahmen der elektrischen Verbindung der elektrischen Anschlüsse des jeweiligen Bauteils die in das Maschinenkoordinatensystem umgerechneten Lagen und Orientierungen und die relevanten Längen der elektrischen Anschlüsse des jeweiligen Bauteils berücksichtigt.

Dadurch, dass die dem jeweiligen Bauteil zugeordneten Informationen für die Handhabungsorte zumindest deren jeweilige Lage und die Art der Handhabung und vorzugsweise auch deren jeweilige Orientierung umfassen, ist es auf einfache Weise automatisiert möglich, dass die Montageeinrichtung mittels eines geeigneten Greifers oder dergleichen das jeweilige Bauteil greift und an die gewünschte Stelle einer zu montierenden Baueinheit fördert. Die Art der Handhabung kann insbesondere spezifizieren, mit welcher Art Handhabungswerkzeug das jeweilige Bauteil gegriffen werden kann. Beispielsweise kann spezifiziert werden, ob das Greifen nach Art eines zangenähnlichen Greifens oder mittels eines Vakuumsaugers erfolgen soll. Die Lage gibt an, an welcher Stelle sich der jeweilige Handhabungsort befindet. Analoge Ausführungen gelten, falls erforderlich, für die Orientierung.

Dadurch, dass die dem jeweiligen Bauteil zugeordneten Informationen für die elektrischen Anschlüsse des jeweiligen Bauteils jeweils deren Lage, deren Orientierung und eine relevante Länge umfassen, ist es auf einfache Weise möglich, der Steuereinrichtung bekannt zu geben, an welcher Stelle (Lage), in welche Richtung (Orientierung) und wie weit (relevante Länge) ein Gegenanschluss oder gegebenenfalls auch das Bauteil bei festgehaltenem Gegenanschluss bewegt werden muss. Der Gegenanschluss kann beispielsweise ein einzelner Leiter sein. Es sind aber auch andere Ausgestaltungen denkbar und möglich.

Die dem jeweiligen Bauteil zugeordneten Informationen stellen sozusagen die elektronische Beschreibung des jeweiligen Bauteils dar, welche erforderlich ist, um das jeweilige Bauteil automatisiert montieren und kontaktieren zu können.

Die Bauteile selbst können elementare Bauteile wie beispielsweise einzelne Klemmen sein. Es kann sich auch um komplexere Bauteile wie beispielsweise Gruppen von Klemmen, Schutzschalter, Stromversorgungseinrichtungen, Peripheriebaugruppen usw. handeln.

Dadurch, dass der Steuereinrichtung, bezogen auf ein Maschinenkoordinatensystem der Montageeinrichtung, die Lage und die Orientierung des jeweiligen Bauteils bekannt werden, ist auf einfache Weise eine Transformation (Umrechnung) der Lagen und Orientierungen des Bauteils, die zunächst nur im Bauteil-Koordinatensystem definiert sind, in das Maschinenkoordinatensystem möglich.

Vorzugsweise weisen die dem jeweiligen Bauteil zugeordneten Informationen eine bauteilübergreifend einheitliche Datenstruktur auf. Dadurch ergibt sich nicht nur eine vereinfachte Handhabung der dem Bauteil zugeordneten Informationen durch die Steuereinrichtung, sondern darüber hinaus auch eine standardisierte, einheitliche und damit relativ zuverlässige Erstellung der Informationen. Die einheitliche Datenstruktur kann insbesondere als Datencontainer ausgebildet sein.

Vorzugsweise umfassen die dem jeweiligen Bauteil zugeordneten Informationen zusätzlich Informationen über die Funktion des jeweiligen Bauteils als Ganzes. Diese Informationen können insbesondere im Rahmen einer intellektuellen Überprüfung durch einen Benutzer von Vorteil sein.

Vorzugsweise umfassen die dem jeweiligen Bauteil zugeordneten Informationen zusätzlich Informationen über die Art und/oder Funktion der elektrischen Anschlüsse des jeweiligen Bauteils. Diese Informationen erleichtern die automatisierte Montage und Kontaktierung noch weiter. Beispielsweise kann bezüglich der Art des jeweiligen elektrischen Anschlusses zusätzlich die Information vorhanden sein, ob es sich bei einem jeweiligen elektrischen Anschluss um eine Schraubklemme, eine Schneidklemme, eine Käfigzugfeder, einen Kontaktschuh oder einen Kontaktstift handelt. Bezüglich der Funktion des jeweiligen elektrischen Anschlusses kann beispielsweise zusätzlich die Information vorhanden sein, ob es sich um einen Anschluss für ein Versorgungspotenzial, einen Taktanschluss, einen Datenanschluss usw. handelt.

Die auf das Maschinenkoordinatensystem bezogene Lage und Orientierung des jeweiligen Bauteils können der Steuereinrichtung auf verschiedene Art und Weise bekannt werden. Beispielsweise ist es möglich, dass das jeweilige Bauteil der Montageeinrichtung an einem definierten Ort und in einer definierten Orientierung zugeführt wird und dass dieser Ort und diese Orientierung der Steuereinrichtung bekannt sind. Alternativ ist es möglich, dass die Lage und die Orientierung des jeweiligen Bauteils der Steuereinrichtung individuell für das jeweilige Bauteil übermittelt werden. Wiederum alternativ ist es möglich, dass die Steuereinrichtung beim Zuführen des jeweiligen Bauteils Sensordaten erfasst und anhand der Sensordaten die Lage und die Orientierung des jeweiligen Bauteils ermittelt.

Die Aufgabe wird weiterhin durch ein Steuerprogramm mit den Merkmalen des Anspruchs 9 gelöst. Erfindungsgemäß bewirkt das Abarbeiten des Maschinencodes durch die Steuereinrichtung, dass die Steuereinrichtung die Montageeinrichtung gemäß einem erfindungsgemäßen Verfahren betreibt.

Die Aufgabe wird weiterhin durch eine Steuereinrichtung mit den Merkmalen des Anspruchs 10 gelöst. Erfindungsgemäß ist die Steuereinrichtung mit einem erfindungsgemäßen Steuerprogramm programmiert, so dass das Abarbeiten des Maschinencodes durch die Steuereinrichtung bewirkt, dass die Steuereinrichtung die Montageeinrichtung gemäß einem erfindungsgemäßen Verfahren betreibt.

Die Aufgabe wird weiterhin durch eine Montageeinrichtung mit den Merkmalen des Anspruchs 11 gelöst. Erfindungsgemäß umfasst die Montageeinrichtung eine erfindungsgemäße Steuereinrichtung.

Vorteilhaft umfasst die Datenstruktur dem Bauteil zugeordnete Informationen. Die Informationen umfassen, bezogen auf ein Bauteil-Koordinatensystem des Bauteils, für elektrische Anschlüsse des Bauteils jeweils deren Lage, deren Orientierung und eine relevante Länge und für Handhabungsorte des Bauteils zumindest deren jeweiligen Lage und die Art der Handhabung und vorzugsweise auch deren jeweilige Orientierung.

Vorzugsweise umfasst die Datenstruktur weiterhin zusätzlich Informationen über die Funktion des Bauteils als Ganzes. Alternativ oder zusätzlich umfasst die Datenstruktur zusätzlich Informationen über die Art und/oder Funktion der elektrischen Anschlüsse des Bauteils.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Montageeinrichtung,
- FIG 2: ein Ablaufdiagramm,
- FIG 3: ein Bauteil und
- FIG 4: eine Datenstruktur.

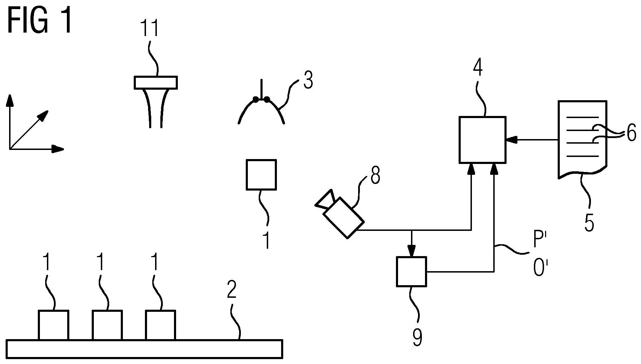

Gemäß FIG 1 sollen mittels einer Montageeinrichtung in automatisierter Weise Bauteile 1 an einer größeren, komplexeren Baueinheit 2 montiert werden. Zu diesem Zweck weist die Montageeinrichtung eine Handhabungseinrichtung 3 auf, mittels derer die Bauteile 1 einzeln an ihren jeweiligen Bestimmungsort an der größeren Baueinheit 2 gebracht werden.

Die Montageeinrichtung umfasst auch eine Steuereinrichtung 4. Die Steuereinrichtung 4 steuert die Montageeinrichtung. Die Steuereinrichtung 4 ist mit einem Steuerprogramm 5 programmiert. Das Steuerprogramm 5 umfasst Maschinencode 6, der von der Steuereinrichtung 4 abarbeitbar ist. Das Abarbeiten des Maschinencodes 6 durch die Steuereinrichtung 4 bewirkt, dass die Steuereinrichtung 4 die Montageeinrichtung gemäß einem Verfahren betreibt, das nachstehend näher erläutert wird.

Im Rahmen der automatisierten Montage werden die Bauteile 1 nacheinander der Montageeinrichtung zugeführt. FIG 1 zeigt - rein beispielhaft - eine Situation, bei der drei Bauteile 1 bereits montiert sind und ein weiteres Bauteil 1 gerade montiert werden soll. Das Zuführen der Bauteile 1 kann unter Steuerung durch die Steuereinrichtung 4 erfolgen. Es ist aber auch möglich, dass die Bauteile 1 der Montageeinrichtung anderweitig zugeführt werden.

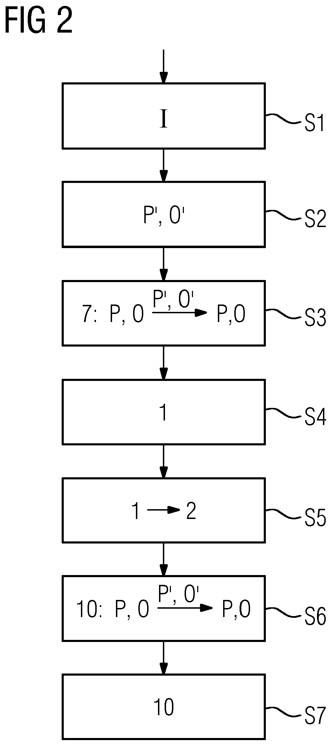

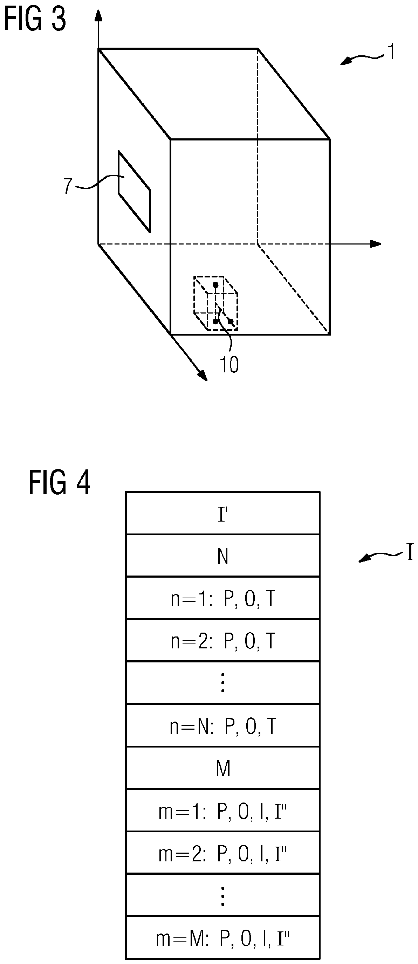

Um das weitere Bauteil 1 ordnungsgemäß montieren zu können, werden der Steuereinrichtung 4 entsprechend der Darstellung in FIG 2 zunächst in einem Schritt S1 Informationen I über das entsprechende Bauteil 1 zur Verfügung gestellt. Die Informationen I werden nachstehend detailliert in Verbindung mit den FIG 3 und 4 erläutert.

Gemäß FIG 3 weist das Bauteil 1 eine Anzahl von Handhabungsorten 7 auf. Die minimale Anzahl an Handhabungsorten 7 ist 1. Hiermit korrespondierend ist in FIG 3 nur ein einziger Handhabungsort 7 dargestellt. In vielen Fällen sind aber mehrere Handhabungsorte 7 vorhanden.

Die Informationen I umfassen gemäß FIG 4 die Anzahl N an Handhabungsorten 7. Weiterhin umfassen die Informationen I für jeden Handhabungsort 7 zumindest dessen jeweilige Lage P und vorzugsweise auch dessen Orientierung O. Die Lage P und die Orientierung O sind auf ein Bauteil-Koordinatensystem des Bauteils 1 bezogen. In FIG 3 sind rein beispielhaft der Ursprung und drei zueinander orthogonale Richtungen eines entsprechenden rechtwinkligen kartesischen Koordinatensystems eingezeichnet. Weiterhin umfassen die Informationen I für jeden Handhabungsort 7 dessen Typ T. Der Typ T gibt an, mit welcher Art von Handhabungseinrichtung 3 das jeweilige Bauelement 1 an diesem Handhabungsort 7 greifbar ist. Weiterhin können die Informationen I für den jeweiligen Handhabungsort 7 auch dessen Größe umfassen, beispielsweise einen Durchmesser.

Die Informationen I umfassen auch weitere Angaben, die nicht auf die Handhabungsorte 7 bezogen sind. Diese Informationen I werden später noch erläutert werden.

In einem Schritt S2 werden der Steuereinrichtung 4 eine Lage P' und eine Orientierung O' des zugeführten Bauteils 1 bekannt. Die Lage P' und die Orientierung O' sind auf ein Maschinenkoordinatensystem bezogen, also auf das Koordinatensystem, in dem sich die Komponenten der Montageeinrichtung bewegen. In FIG 1 sind rein beispielhaft der Ursprung und drei zueinander orthogonale Richtungen eines entsprechenden rechtwinkligen kartesischen Koordinatensystems eingezeichnet.

Die Lage P' und die Orientierung O' des zugeführten Bauteils 1 können der Steuereinrichtung 4 auf verschiedene Art und Weise bekannt werden. Beispielsweise ist es möglich, dass das Bauteil 1 der Montageeinrichtung an einem definierten Ort und in einer definierten Orientierung zugeführt wird. In diesem Fall ist es lediglich erforderlich, der Steuereinrichtung 4 diesen Ort und diese Orientierung einmalig vorzugeben, beispielsweise im Rahmen einer Parametrierung. Alternativ ist es möglich, dass die Lage P' und die Orientierung O' des Bauteils 1 der Steuereinrichtung 4 individuell übermittelt werden. Beispielsweise kann eine Sensoreinrichtung 8 (beispielsweise ein Kamerasystem oder ein Laserscanner) vorhanden sein, mittels dessen beim Zuführen des Bauteils 1 Sensordaten erfasst werden. Es ist möglich, die Sensordaten direkt der Steuereinrichtung 4 zuzuführen. In diesem Fall erfasst die Steuereinrichtung 4 über die Sensoreinrichtung 8 die entsprechenden Sensordaten und kann dadurch anhand der Sensordaten die Lage P' und die Orientierung O' des zugeführten Bauteils 1 ermitteln. Alternativ kann der Sensoreinrichtung 8 eine Auswertungseinrichtung 9 zugeordnet sein. In diesem Fall kann die Auswertungseinrichtung 9 anhand der von der Sensoreinrichtung 8 erfassten Sensordaten die Lage P' und die Orientierung O' des zugeführten Bauteils 1 ermitteln und der Steuereinrichtung 4 individuell für das zugeführte Bauteil 1 übermitteln.

In einem Schritt S3 transformiert die Steuereinrichtung 4 für die einzelnen Handhabungsorte 7 deren Lagen P und Orientierungen O vom Bauteil-Koordinatensystem in das Maschinenkoordinatensystem. Es erfolgt also eine entsprechende Umrechnung. Dies ist möglich, weil mit der Lage P' und der Orientierung O' des zugeführten Bauteils 1 im Maschinenkoordinatensystem eine direkte Umrechnung von Koordinaten im Bauteil-Koordinatensystem in das Maschinenkoordinatensystem möglich ist. Die entsprechende Umrechnung ist Fachleuten allgemein bekannt.

In einem Schritt S4 steuert die Steuereinrichtung 4 sodann die Handhabungseinrichtung 3 an, so dass die Handhabungseinrichtung 3 das zugeführte Bauteil 1 an den korrekten Handhabungsorten 7 greift. Sodann positioniert die Steuereinrichtung 4 in einem Schritt S5 durch entsprechende Ansteuerung von lagegeregelten Achsen der Montageeinrichtung (die Achsen sind nicht dargestellt) das Bauteil 1 am gewünschten Ort der Baueinheit 2 und montiert es dadurch. Die Steuereinrichtung 4 berücksichtigt hierbei die Art der Handhabungsorte 7 dadurch, dass sie die "richtige" Handhabungseinrichtung 3 selektiert und/oder dass sie das zugeführte Bauteil 1 mittels der Handhabungseinrichtung 3 an für die Handhabungseinrichtung 3 geeigneten Handhabungsorten 7 greift. Selbstverständlich berücksichtigt die Steuereinrichtung 4 sowohl beim Greifen als auch beim Montieren des Bauteils 1 ebenfalls die in das Maschinenkoordinatensystem transformierten Lagen, da sie anderenfalls die Handhabungseinrichtung 3 nicht an die korrekten Lagen führen könnte. Gleiches gilt, falls vorhanden, für die in das Maschinenkoordinatensystem transformierten Orientierungen der Handhabungsorte 7.

Die Bauteile 1 weisen entsprechend der schematischen Darstellung in FIG 3 weiterhin elektrische Anschlüsse 10 auf. Die minimale Anzahl an elektrischen Anschlüssen 10 ist 1. Hiermit korrespondierend ist in FIG 3 nur ein einziger elektrischer Anschluss 10 dargestellt. In vielen Fällen sind aber mehrere elektrische Anschlüsse 10 vorhanden.

Die Informationen I umfassen gemäß FIG 4 auch die Anzahl M an elektrischen Anschlüssen 10. Weiterhin umfassen die Informationen I für jeden elektrischen Anschluss 10 zumindest dessen jeweilige Lage P, dessen Orientierung O und eine relevante Länge l. Die Lage P und die Orientierung O sind auf das Bauteil-Koordinatensystem des Bauteils 1 bezogen. Auch diese Informationen werden der Steuereinrichtung 4 im Schritt S1 bekannt. Die Steuereinrichtung 4 kann daher in einem Schritt S6 - analog zum Schritt S3 - auch für die einzelnen Anschlüsse 10 deren Lagen P und Orientierungen O vom Bauteil-Koordinatensystem in das Maschinenkoordinatensystem transformieren. Eine Transformation auch der relevanten Länge l ist nicht erforderlich. Denn die relevante Länge l als solche bleibt unverändert erhalten.

In einem Schritt S7 steuert die Steuereinrichtung 4 sodann die Handhabungseinrichtung 3 oder eine weitere Einrichtung 11 an, so dass die elektrischen Anschlüsse 10 einzeln oder gruppenweise - unter Umständen auch alle elektrischen Anschlüsse 10 zusammen - kontaktiert werden. Beispielsweise kann die Steuereinrichtung 4 zum Kontaktieren eines einzelnen elektrischen Anschlusses 10 einen geeigneten Draht in diesen elektrischen Anschluss 10 einführen. Der Ort, an dem dieser Draht in diesen elektrischen Anschluss 10 eingeführt werden muss, ist der Steuereinrichtung 4 aufgrund der Lage P des entsprechenden elektrischen Anschlusses 10 bekannt. Die Richtung, in welcher der Draht in diesen elektrischen Anschluss 10 eingeführt werden muss, ist der Steuereinrichtung 4 aufgrund der Orientierung O des entsprechenden elektrischen Anschlusses 10 bekannt. Die relevante Länge l kann beispielsweise angeben, wie weit der Draht in diesen elektrischen Anschluss 10 eingeführt werden muss.

Die Steuereinrichtung 4 berücksichtigt somit bei der Ansteuerung der Montageeinrichtung im Rahmen der elektrischen Verbindung der elektrischen Anschlüsse 10 des Bauteils 1 die in das Maschinenkoordinatensystem transformierten Lagen und Orientierungen und die relevanten Längen l der elektrischen Anschlüsse 10 des Bauteils 1.

Die dem jeweiligen Bauteil 1 zugeordneten Informationen I sind in der Regel unabhängig vom jeweiligen Bauteil 1 in die in FIG 4 dargestellte Datenstruktur eingebettet. Die Informationen I können sich - selbstverständlich - von Bauteil 1 zu Bauteil 1 voneinander unterscheiden. Die Datenstruktur als solche ist jedoch vorzugsweise bauteilübergreifend einheitlich. Die Datenstruktur kann insbesondere als Datencontainer ausgebildet sein.

Es ist möglich, dass dem jeweiligen Bauteil 1 ausschließlich die bisher erläuterten Informationen I zugeordnet sind. Vorzugsweise sind dem jeweiligen Bauteil 1 jedoch zusätzlich weitere Informationen I', I" zugeordnet. Diese weiteren Informationen I', I" sind ebenfalls in die Datenstruktur von FIG 4 eingebettet.

Beispielsweise können die weiteren Informationen I' die Funktion des jeweiligen Bauteils 1 als Ganzes umfassen, also ob es sich beispielsweise um eine Klemme handelt, eine Peripheriebaugruppe, eine Stromversorgung, einen Schutzschalter usw.. Die Informationen I" sind auf den jeweiligen elektrischen Anschluss 10 des jeweiligen Bauteils 1 bezogen. Sie können beispielsweise die Art und/oder die Funktion des jeweiligen elektrischen Anschlusses 10 beschreiben. Für die Art des jeweiligen elektrischen Anschlusses 10 können die weiteren Informationen I" beispielsweise beschreiben, ob es sich bei dem jeweiligen elektrischen Anschluss 10 um eine Schraubklemme, eine Käfigzugfeder, eine Schneidklemme, einen über das restliche Bauteil 1 hinausragenden Pin usw. handelt. Auch können sie beschreiben, welchen Querschnitt oder welchen Querschnittsbereich der jeweilige elektrische Gegenanschluss (beispielsweise ein Draht) aufweisen sollte, ob der Draht abisoliert sein sollte usw.. Für die Funktion des jeweiligen elektrischen Anschlusses 10 können die weiteren Informationen I" beispielsweise beschreiben, ob es sich bei dem jeweiligen elektrischen Anschluss 10 um einen Signalanschluss, einen Versorgungsanschluss, einen Taktanschluss usw. handelt.

Zusammengefasst betrifft die vorliegende Erfindung somit folgenden Sachverhalt:
Einer Steuereinrichtung einer Montageeinrichtung zum Montieren und Kontaktieren elektrischer Bauteile 1 werden vor dem Greifen eines der Montageeinrichtung jeweils zugeführten Bauteils 1 dem jeweiligen Bauteil 1 zugeordnete Informationen I zur Verfügung gestellt. Die Informationen I umfassen, bezogen auf ein Bauteil-Koordinatensystem des jeweiligen Bauteils 1, für elektrische Anschlüsse 10 des jeweiligen Bauteils 1 jeweils deren Lage P, deren Orientierung O und eine relevante Länge l und für Handhabungsorte 7 des jeweiligen Bauteils 1 zumindest deren jeweilige Lage P und die Art der Handhabung und vorzugsweise auch deren jeweilige Orientierung O. Der Steuereinrichtung 4 werden, bezogen auf ein Maschinenkoordinatensystem, eine Lage P' und eine Orientierung O' des jeweiligen Bauteils 1 bekannt. Sie rechnet anhand der Lage P' und der Orientierung O' des jeweiligen Bauteils 1 im Maschinenkoordinatensystem die durch die dem jeweiligen Bauteil 1 zugeordneten Informationen I definierten Lagen P und Orientierungen O in das Maschinenkoordinatensystem um. Sie berücksichtigt beim Greifen und bei der Montage des jeweiligen Bauteils 1 die Art und die in das Maschinenkoordinatensystem umgerechneten Lagen P und, falls vorhanden, auch die in das Maschinenkoordinatensystem umgerechneten Orientierungen O der Handhabungsorte 7. Bei der elektrischen Verbindung der elektrischen Anschlüsse 10 berücksichtigt die Steuereinrichtung 4 die in das Maschinenkoordinatensystem umgerechneten Lagen P und Orientierungen O und die relevanten Längen l der elektrischen Anschlüsse 10.

Die vorliegende Erfindung weist viele Vorteile auf. Insbesondere wird - beginnend mit der Erstellung der Informationen I und deren Zuordnung zum jeweiligen Bauteil 1 - eine durchgängige automatisierte Verwertung der Informationen I ermöglicht. Die Informationen I werden in standardisierter, digital verarbeiteter Form zur Verfügung gestellt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung wie durch die angehängten Ansprüche definiert zu verlassen.

## Patentansprüche

1. Verfahren zum Montieren und Kontaktieren elektrischer Bauteile (1), die elektrische Anschlüsse (10) und Handhabungsorte (7) aufweisen, mittels einer Montageeinrichtung,
- wobei einer Steuereinrichtung der Montageeinrichtung vor dem Greifen eines der Montageeinrichtung jeweils zugeführten Bauteils (1) dem jeweiligen Bauteil (1) zugeordnete Informationen (I) zur Verfügung gestellt werden,
- wobei die dem jeweiligen Bauteil (1) zugeordneten Informationen (I), bezogen auf ein Bauteil-Koordinatensystem des jeweiligen Bauteils (1), für die elektrischen Anschlüsse (10) des jeweiligen Bauteils (1) jeweils deren Lage (P), deren Orientierung (O) und eine relevante Länge (l) und für die Handhabungsorte (7) zumindest deren jeweilige Lage (P) und die Art der Handhabung und vorzugsweise auch deren jeweilige Orientierung (O) umfassen,
- wobei der Steuereinrichtung (4), bezogen auf ein Maschinenkoordinatensystem der Montageeinrichtung, eine Lage (P') und eine Orientierung (O') des jeweiligen Bauteils (1) bekannt werden,
- wobei die Steuereinrichtung (4) anhand der Lage (P') und der Orientierung (O') des jeweiligen Bauteils (1) im Maschinenkoordinatensystem die durch die dem jeweiligen Bauteil (1) zugeordneten Informationen (I) definierten Lagen (P) und Orientierungen (O) in das Maschinenkoordinatensystem umrechnet,
- wobei die Steuereinrichtung (4) bei der Ansteuerung der Montageeinrichtung im Rahmen des Greifens und der Montage des jeweiligen Bauteils (1) die Art und die in das Maschinenkoordinatensystem umgerechneten Lagen (P) und, falls vorhanden, auch die in das Maschinenkoordinatensystem umgerechneten Orientierungen (O) der Handhabungsorte (7) des jeweiligen Bauteils (1) berücksichtigt und
- wobei die Steuereinrichtung (4) bei der Ansteuerung der Montageeinrichtung im Rahmen der elektrischen Verbindung der elektrischen Anschlüsse (10) des jeweiligen Bauteils (1) die in das Maschinenkoordinatensystem umgerechneten Lagen (P) und Orientierungen (O) und die relevanten Längen (l) der elektrischen Anschlüsse (10) des jeweiligen Bauteils (1) berücksichtigt.

2. Verfahren nach Anspruch 1,
**dadurch gekennzeichnet,**
**dass** die dem jeweiligen Bauteil (1) zugeordneten Informationen (I) eine bauteilübergreifend einheitliche Datenstruktur aufweisen.

3. Verfahren nach Anspruch 2,
**dadurch gekennzeichnet,**
**dass** die einheitliche Datenstruktur als Datencontainer ausgebildet ist.

4. Verfahren nach Anspruch 1, 2 oder 3,
**dadurch gekennzeichnet,**
**dass** die dem jeweiligen Bauteil (1) zugeordneten Informationen (I) zusätzlich Informationen (I') über die Funktion des jeweiligen Bauteils (1) als Ganzes umfassen.

5. Verfahren nach einem der obigen Ansprüche,
**dadurch gekennzeichnet,**
**dass** die dem jeweiligen Bauteil (1) zugeordneten Informationen (I) zusätzlich Informationen (I") über die Art und/oder Funktion der elektrischen Anschlüsse (10) des jeweiligen Bauteils (1) umfassen.

6. Verfahren nach einem der Ansprüche 2 bis 5,
**dadurch gekennzeichnet,**
**dass** der Steuereinrichtung (4) bezogen auf das Maschinenkoordinatensystem die Lage (P') und die Orientierung (O') des jeweiligen Bauteils (1) dadurch bekannt werden, dass das jeweilige Bauteil (1) der Montageeinrichtung an einem definierten Ort und in einer definierten Orientierung zugeführt wird und dass dieser Ort und diese Orientierung der Steuereinrichtung (4) bekannt sind.

7. Verfahren nach einem der Ansprüche 2 bis 5,
**dadurch gekennzeichnet,**
**dass** der Steuereinrichtung (4) bezogen auf das Maschinenkoordinatensystem die Lage (P') und die Orientierung (O') des jeweiligen Bauteils (1) dadurch bekannt werden, dass die Lage (P') und die Orientierung (O') des jeweiligen Bauteils (1) der Steuereinrichtung (4) individuell für das jeweilige Bauteil (1) übermittelt werden.

8. Verfahren nach einem der Ansprüche 2 bis 5,
**dadurch gekennzeichnet,**
**dass** der Steuereinrichtung (4) bezogen auf das Maschinenkoordinatensystem die Lage (P') und die Orientierung (O') des jeweiligen Bauteils (1) dadurch bekannt werden, dass die Steuereinrichtung (4) beim Zuführen des jeweiligen Bauteils (1) Sensordaten erfasst und anhand der Sensordaten die Lage (P') und die Orientierung (O') des jeweiligen Bauteils (1) ermittelt.

9. Steuerprogramm für eine Steuereinrichtung (4) zum Steuern einer Montageeinrichtung zum Greifen und Montieren elektrischer Bauteile (1), wobei das Steuerprogramm Maschinencode (6) umfasst, der von der Steuereinrichtung (4) unmittelbar abarbeitbar ist, wobei das Abarbeiten des Maschinencodes (6) durch die Steuereinrichtung (4) bewirkt, dass die Steuereinrichtung (4) die Montageeinrichtung gemäß einem Verfahren nach einem der obigen Ansprüche betreibt.

10. Steuereinrichtung zum Steuern einer Montageeinrichtung zum Greifen und Montieren elektrischer Bauteile (1), wobei die Steuereinrichtung mit einem Steuerprogramm (5) nach Anspruch 9 programmiert ist, so dass das Abarbeiten des Maschinencodes (6) durch die Steuereinrichtung bewirkt, dass die Steuereinrichtung die Montageeinrichtung gemäß einem Verfahren nach einem der Ansprüche 1 bis 8 betreibt.

11. Montageeinrichtung zum Greifen, Montieren und Kontaktieren elektrischer Bauteile (1), die elektrische Anschlüsse (10) und Handhabungsorte (7) aufweisen, wobei die Montageeinrichtung eine Steuereinrichtung (4) nach Anspruch 10 umfasst.

## Claims

1. Method for assembling and contacting electrical components (1) which have electrical connections (10) and handling locations (7), by means of an assembly facility,
- wherein, before a component (1) supplied to the assembly facility in each case is gripped, a control facility of the assembly facility is provided with information (I) associated with the respective component (1)
- wherein, in relation to a component coordinate system of the respective component (1), the information (I) associated with the respective component (1) comprises the position (P), orientation (O) and a relevant length (l) for the electrical connections (10) of the respective component (1) and at least the respective position (P) and the type of handling and preferably also the respective orientation (O) for the handling locations (7),
- wherein, in relation to a machine coordinate system of the assembly facility, a position (P') and an orientation (O') of the respective component (1) are known to the control facility (4),
- wherein the control facility (4) converts the positions (P) and orientations (O) defined by the information (I) associated with the respective component (1) into the machine coordinate system based on the position (P') and the orientation (O') of the respective component (1) in the machine coordinate system,
- wherein the control facility (4) takes into account the type and the positions (P) converted into the machine coordinate system and, if present, also the orientations (O) of the handling locations (7) of the respective component (1) converted into the machine coordinate system when actuating the assembly facility in the context of gripping and assembling the respective component (1) and
- wherein the control facility (4) takes into account the positions (P) and orientations (O) converted into the machine coordinate system and the relevant lengths (l) of the electrical connections (10) of the respective component (1) when actuating the assembly facility in the context of electrically connecting the electrical connections (10) of the respective component (1).

2. Method according to claim 1,
**characterised in that**
the information (I) associated with the respective component (1) has a uniform data structure across all components.

3. Method according to claim 2,
**characterised in that**
the uniform data structure is designed as a data container.

4. Method according to claim 1, 2 or 3,
**characterised in that**
the information associated (I) with the respective component (1) additionally comprises information (I') about the function of the respective component (1) as a whole.

5. Method according to one of the above claims,
**characterised in that**
the information (I) associated with the respective component (1) additionally comprises information (I") about the type and/or function of the electrical connections (10) of the respective component (1).

6. Method according to one of claims 2 to 5,
**characterised in that**
the position (P') and the orientation (O') of the respective component (1) in relation to the machine coordinate system are known to the control facility (4) **in that** the respective component (1) is supplied to the assembly facility at a defined location and in a defined orientation and that this location and this orientation are known to the control facility (4).

7. Method according to one of claims 2 to 5,
**characterised in that**
the position (P') and the orientation (O') of the respective component (1) are known to the control facility (4) in relation to the machine coordinate system **in that** the position (P') and the orientation (O') of the respective component (1) are transmitted to the control facility (4) individually for the respective component (1).

8. Method according to one of claims 2 to 5,
**characterised in that**
the position (P') and the orientation (O') of the respective component (1) are known to the control facility (4) in relation to the machine coordinate system **in that** the control facility (4) detects sensor data when supplying the respective component (1) and determines the position (P') and the orientation (O') of the respective component (1) based on the sensor data.

9. Control program for a control facility (4) for controlling an assembly facility for gripping and assembling electrical components (1), wherein the control program comprises machine code (6) which can be executed immediately by the control facility (4), wherein the execution of the machine code (6) is brought about by the control facility (4), such that the control facility (4) operates the assembly facility according to a method according to one of the above claims.

10. Control facility for controlling an assembly facility for gripping and assembling electrical components (1), wherein the control facility is programmed with a control program (5) according to claim 9, such that the execution of the machine code (6) by the control facility causes the control facility to operate the assembly facility according to a method according to one of claims 1 to 8.

11. Assembly facility for gripping, assembling, and contacting electrical components (1), which has electrical connections (10) and handling locations (7), wherein the assembly facility comprises a control facility (4) according to claim 10.

## Revendications

1. Procédé de montage et de mise en contact de composants (1) électriques, qui ont des bornes (10) électriques et des organes (7) de manœuvre, au moyen d'un dispositif de montage,
- dans lequel, on met à disposition d'un dispositif de commande du dispositif de montage avant la prise d'un composant (1), amené respectivement au dispositif de montage, des informations (I) affectées au composant (1) respectif,
- dans lequel les informations (I) affectées au composant (1) respectif comprennent, rapporté à un système de coordonnées d'un composant du composant (1) respectif, pour les bornes (10) électriques du composant (1) respectif, respectivement sa position (P), son orientation (O) et une longueur (l) pertinente et pour les emplacements (7) de manœuvre, au moins leur position (P) respective et le type de la manœuvre et de préférence également leur orientation (O) respective,
- dans lequel on fait connaître au dispositif (4) de commande, rapporté à un système de coordonnées de machine du dispositif de montage, une position (P') et une orientation (O') du composant (1) respectif,
- dans lequel le dispositif (4) de commande recalcule dans le système de coordonnées de machine, à l'aide de la position (P') et de l'orientation (O') du composant (1) respectif dans le système de coordonnées de machine, les positions (P) et les orientations (O) définies par les informations (I) affectées au composant (1) respectif,
- dans lequel le dispositif (4) de commande tient compte, lors de la commande du dispositif de montage dans le cadre de la prise et du montage du composant (1) respectif, du type et des positions (P) recalculées dans le système de coordonnées de machine et, si elles sont présentes, des orientations (O), recalculées également dans le système de coordonnées de la machine, des emplacements (7) de manœuvre du composant (1) respectif et
- le dispositif (4) de commande tient compte, lors de la commande du dispositif de montage dans le cadre de la liaison électrique des bornes (10) électriques du composant (1) respectif, des positions (P) et des orientations (O), recalculées dans le système de coordonnées de machine, et des longueurs (l) pertinentes des bornes (10) électriques du composant (1) respectif.

2. Procédé suivant la revendication 1,
**caractérisé en ce que**
les informations (I) affectées au composant (1) respectif ont une structure de données unitaire prenant le composant.

3. Procédé suivant la revendication 2,
**caractérisé en ce que**
la structure de données unitaire est constituée en boîte de données.

4. Procédé suivant la revendication 1, 2 ou 3,
**caractérisé en ce que**
les informations (I) affectées au composant (1) respectif comprennent en outre des informations (I') sur la fonction du composant (1) respectif dans son ensemble.

5. Procédé suivant l'une des revendications précédentes, **caractérisé en ce que**
les informations (I) affectées au composant (1) respectif comprennent en outre des informations (I") sur le type et/ou la fonctions des bornes (10) électriques du composant (1) respectif.

6. Procédé suivant l'une des revendications 2 à 5, **caractérisé en ce que**
l'on fait connaître au dispositif (4) de commande, rapporté au système de coordonnées de machine, la position (P') et l'orientation (O') du composant (1) respectif, par le fait que le composant (1) respectif est amené au dispositif de montage en un emplacement défini et dans une orientation définie et que cet emplacement et cette orientation sont connus du dispositif (4) de montage.

7. Procédé suivant l'une des revendications 2 à 5, **caractérisé en ce que**
l'on fait connaître au dispositif (4) de commande, rapporté au système de coordonnées de machine, la position (P') et l'orientation (O') du composant (1) respectif, par le fait que la position (P') et l'orientation (O') du composant (1) respectif sont transmises au dispositif (4) de commande, individuellement pour le composant (1) respectif.

8. Procédé suivant l'une des revendications 2 à 5, **caractérisé en ce que**
l'on fait connaître au dispositif (4) de commande, rapporté au système de coordonnées de machine, la position (P') et l'orientation (O') du composant (1) respectif, par le fait que le dispositif (4) de commande détecte des données de capteur amenées, lors de l'amenée du composant (1) respectif et détermine, à l'aide des données de capteur, la position (P') et l'orientation (O') du composant (1) respectif.

9. Programme de commande d'un dispositif (4) de commande pour commander un dispositif de montage de prise et de montage de composants (1) électriques, dans lequel le programme de commande comprend un code machine (6), qui peut être élaboré directement par le dispositif (4) de commande, dans lequel l'élaboration du code machine (6) par le dispositif (4) de commande fait que le dispositif (4) de commande fait fonctionner le dispositif de montage selon un procédé suivant l'une des revendications précédentes.

10. Dispositif de commande d'un dispositif de montage pour la prise et le montage de composants (1) électriques, dans lequel le dispositif de commande est programmé par un programme (5) de commande suivant la revendication 9, de manière à ce que l'élaboration du code machine (6) par le dispositif de commande fait que le dispositif de commande fait fonctionner le dispositif de montage selon un procédé suivant l'une des revendications 1 à 8.

11. Dispositif de montage pour la prise et le montage et la mise en contact de composants (1) électriques, qui a des bornes (10) électriques et des emplacements (7) de manœuvre, le dispositif de montage comprenant un dispositif (4) de commande suivant la revendication 10.
